# EUROPEAN PATENT APPLICATION

(11) **EP 4 844 389 A1**
(43) Date of publication of application: **25.11.2026**
(21) Application number: 26180291.2
(22) Date of filing: 21.05.2026
(51) Int. Cl.: G01N 25/48, G01N 25/20

(54) **THERMAL ANALYSIS APPARATUS**

(30) Priority: 22.05.2025 JP 2025085373
(71) Applicant: Hitachi High-Tech Analysis Corporation, Tokyo 105-6411 (JP)
(72) Inventor: OKANO, Yui, Tokyo, 105-6411 (JP); KOBAYASHI, Kengo, Tokyo, 105-6411 (JP)
(74) Representative: Stöckeler, Ferdinand

(57) **Abstract**

A thermal analysis apparatus that can improve measurement throughput by rapidly cooling a heating furnace is proposed, which includes a cylindrical furnace tube extending in an axial direction, a balance arm placing a sample inside the furnace tube, a detector disposed at rear-end side of the balance arm in the axial direction, extending forward, and detecting the weight and thermal characteristics of the samples, and a cylindrical heating furnace provided on an outer periphery of the furnace tube and extending in the axial direction, the thermal analysis apparatus further includes a blowing unit that providing airflow, a duct forming a flow path of the airflow in communication with the blowing unit and is disposed at an outer side in the axial direction relative to the heating furnace, and an air outlet formed by opening a portion of the duct to direct airflow to the furnace tube and the heating furnace.

## Description

### BACKGROUND

### Technical Field

The present disclosure relates to a thermal analysis apparatus that measures thermal behavior of a sample accompanying temperature changes by heating the sample.

### Description of the Related Art

In the related art, as a method of evaluating temperature characteristics of a sample, a method called thermal analysis that measures thermal behavior (physical changes) of a sample accompanying temperature changes by heating the sample has been performed. Thermal analysis is defined in "General rules for thermal analysis" in JIS K 0129:2005 and techniques of measuring physical properties of a measurement target (sample) when the temperature of the sample is controlled by a program are all called thermal analysis. As general thermal analysis, there are five kinds of methods, (1) differential thermal analysis (DTA) that detects a temperature (temperature difference), (2) differential scanning calorimetry (DSC) that measures a heat flow difference, (3) thermogravimetric analysis (TG) that detects mass (weight variation), (4) thermomechanical analysis (TMA) that detects dynamic characteristics, and (5) dynamic mechanical analysis (DMA).

As such a thermal analysis apparatus, a configuration is known in which a sample is placed in a furnace tube and a cylindrical heating furnace is provided around the outer periphery of the furnace tube (see, for example, Patent Document 1).

Alternatively, a technique is known that blows air, using a cooling fan, to a side of a furnace through a vent of a radiation shield for reflecting radiant heat of the furnace to improve measurement throughput by cooling the furnace after measuring a sample and immediately performing the next measurement (Patent Literature 2).

### (Prior Art Document)

### (Patent Document)

(Patent Document 1) Japanese Patent Application Publication No. 2021-001870
(Patent Document 2) Japanese Patent No. 7480737

### SUMMARY

However, because a cylindrical heating furnace is provided spaced apart from the outer periphery of a furnace tube, even when the side of the heating furnace is cooled as in the technique described in Patent Document 2, it is difficult to sufficiently cool the entire heating furnace, and consequently to cool a furnace tube, so it is difficult to enhance the measurement throughput.

Accordingly, the present disclosure has been made to solve the problems described above, an objective of the present disclosure is to provide a thermal analysis apparatus capable of improving the measurement throughput by rapidly cooling a heating furnace that has been heated.

In order to achieve the objectives, a thermal analysis apparatus of the present disclosure includes: a cylindrical furnace tube extending in an axial direction; a balance arm that places sample inside the furnace tube; a detector disposed at rear-end side of the balance arm in the axial direction, extending in the axial direction, and detecting the weight and thermal characteristics of the sample; and a cylindrical heating furnace provided on an outer periphery of the furnace tube and extending in the axial direction, wherein the thermal analysis apparatus further comprises a blowing unit for providing airflow, a duct that is in communication with the blowing unit to form a flow path of the airflow, and that is disposed at an outer side in the axial direction relative to the heating furnace, and an air outlet formed by opening a portion of the duct so as to direct airflow to the furnace tube and the heating furnace.

According to the thermal analysis apparatus, since the air outlet is disposed at the outer side relative to the heating furnace in the axial direction, airflow can be directed along the entire cylindrical surfaces of the furnace tube and the heating furnace, whereby it is possible to improve measurement throughput by rapidly cooling the heating furnace that has been heated.

In contrast, even if airflow is directed from a direction perpendicular to the axial direction of the heating furnace, the airflow hardly flows along the axial direction of the heating furnace, so the airflow is not directed to the entire heating furnace.

In the thermal analysis apparatus of the present disclosure, a blowing direction of the airflow at the air outlet may be along the axial direction.

According to the thermal analysis apparatus, airflow can be more reliably directed to the entire cylindrical surfaces of the furnace tube and the heating furnace.

In thermal analysis apparatus of the present disclosure, the air outlet may be disposed at a position intersecting the heating furnace when viewed from the axial direction.

According to the thermal analysis apparatus, since airflow from the air outlet is directed to at least a portion of the end face of the heating furnace, it is possible to rapidly cool the heating furnace that has been heated.

In the thermal analysis apparatus of the present disclosure, the airflow may be directed to an outer periphery of the heating furnace and a gap between the furnace tube and the heating furnace.

According to the thermal analysis apparatus, it is possible to more rapidly cool the furnace tube and the heating furnace that has been heated.

In the thermal analysis apparatus of the present disclosure, a cylindrical sample chamber extending in the axial direction may be provided on the outer periphery of the heating furnace.

According to the thermal analysis apparatus, the airflow that is directed to the outer periphery of the heating furnace flows downstream along the axial direction through the region between the outer periphery of the heating furnace and the sample chamber, whereby the heating furnace that has been heated can be cooled more rapidly.

The thermal analysis apparatus of the present disclosure may include a cooling unit or a heating unit at an upstream side or a downstream side of the blowing unit.

When the cooling unit (or the heating unit) is not provided, the blowing unit supplies airflow at room temperature, and it is possible to adjust the airflow temperature to a temperature lower or higher than room temperature by means of the cooling unit (or the heating unit).

In the thermal analysis apparatus of the present disclosure, a front-end portion having an elongated, reduced diameter while being open at a front-end is integrally formed at a front-end side of the furnace tube, the thermal analysis apparatus may further include a cylindrical cover duct surrounding the front-end portion, and a front end of the cover duct may pass through the sample chamber and face the outside.

According to the thermal analysis apparatus, by providing the cover duct to be inserted through the first opening and the second opening, the front-end portion of the furnace tube can be covered by the cover duct between the first opening and the second opening, whereby the heat retention performance at the front end is improved.

As a result, it is possible to suppress solidification of the gas generated from the sample in the furnace tube at the front-end portion or a temperature drop of the gas.

The thermal analysis apparatus of the present disclosure may further include a transfer tube fitted onto the front-end portion of the furnace tube and inserted into the cover duct, wherein gas generated from the sample in the furnace tube may be introduced, via the transfer tube, into a gas analysis apparatus connected to another end of the transfer tube.

According to the thermal analysis apparatus, when measuring gas generated from a sample in the furnace tube using a gas analysis apparatus through the transfer tube, because the transfer tube is inserted in the cover duct, the heat-retention effect of the cover duct makes it possible to suppress solidification of the gas generated from the sample and suppress a temperature drop of the gas in the furnace tube.

The thermal analysis apparatus of the present disclosure may include a heating unit heating the transfer tube and suppressing solidification of the gas generated from the sample or a temperature drop of the gas in the transfer tube.

According to the thermal analysis apparatus, it is possible to further suppress solidification of the gas generated from the sample or a temperature drop of the gas in the transfer tube.

In the thermal analysis apparatus of the present disclosure, a front-end portion having an elongated, reduced diameter while being open at a front-end is integrally formed at a front-end side of the furnace tube, a region of an outer surface of the furnace tube, extending from the front-end portion toward a rear end to a part of a portion inserted into the heating furnace, or a separate member covering the region may constitute a furnace-tube heat transfer unit, the thermal analysis apparatus may further include a transfer tube fitted onto the furnace-tube heat transfer unit at a position overlapping the front-end portion of the furnace tube, and heat from the heating furnace is transferred to the transfer tube through the furnace-tube heat transfer unit, whereby it is possible to suppress solidification of the gas generated from the sample or a temperature drop of the gas in the transfer tube.

According to the thermal analysis apparatus, it is possible to suppress solidification of the gas generated from the sample in the furnace tube at the front-end portion or a temperature drop of the gas.

The thermal analysis apparatus of the present disclosure may be a thermogravimetric analysis apparatus, a differential thermal analysis apparatus, or a thermogravimetry-differential thermal analysis apparatus.

According to the present disclosure, a thermal analysis apparatus that can improve measurement throughput by rapidly cooling a heating furnace is achieved.

### BRIEF DESCRIPTION OF THE DRAWINGS

FIG. 1 is a perspective view showing the configuration of a thermal analysis apparatus according to a first embodiment of the present disclosure.
FIG. 2 is a view showing an embodiment in which a sample is set or replaced in the thermal analysis apparatus.
FIG. 3 is a cross-sectional view taken along line A-A of FIG. 1.
FIG. 4 is a view showing the arrangement of a duct and an air outlet seen from a front-end side.
FIG. 5 is a cross-sectional view of the thermal analysis apparatus when a cover duct is provided.
FIG. 6 is a view showing the arrangement of the duct and the air outlet seen from the front-end side when the cover duct is provided.
FIG. 7 is a cross-sectional view of the thermal analysis apparatus when a transfer tube is provided in the cover duct.
FIG. 8 is a cross-sectional view showing the configuration of a thermal analysis apparatus according to a second embodiment of the present disclosure when a cover duct is provided.
FIG. 9 is a view showing the arrangement of a duct and an air outlet of the second embodiment seen from a front-end side.
FIG. 10 is a view showing a modified example of the duct and the air outlet.
FIG. 11 is a cross-sectional view showing a modified example of a thermal analysis apparatus that retains heat of a transfer tube using a heat transfer unit of a furnace tube instead of the cover duct.

### DETAILED DESCRIPTION

Hereinafter, embodiments of the present disclosure are described with reference to drawings. Further, along an axial direction O, a front-end portion 9a of a furnace tube 9 is defined as a "front end (side)," and the opposite side is defined as a "rear end (side)."

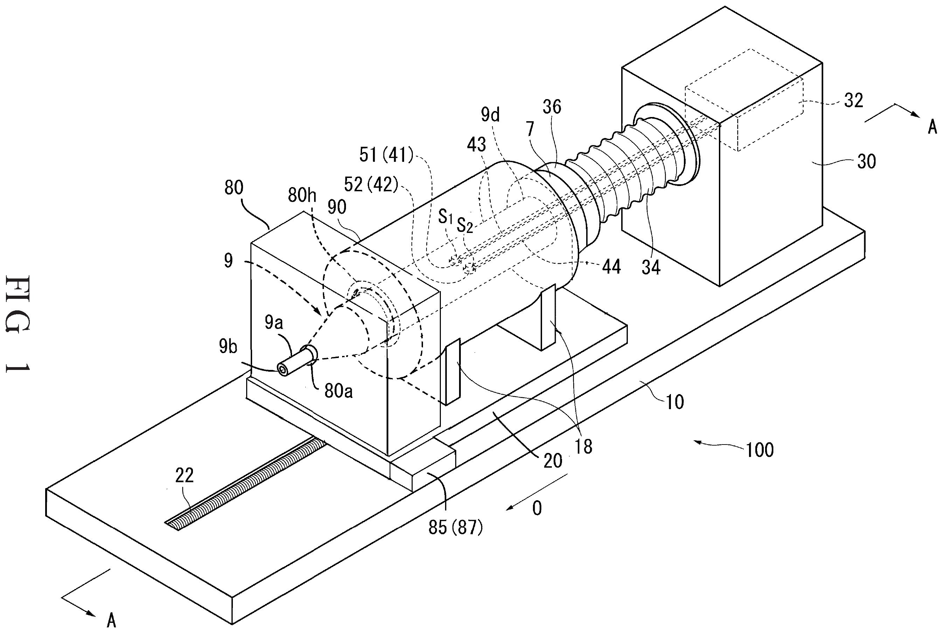

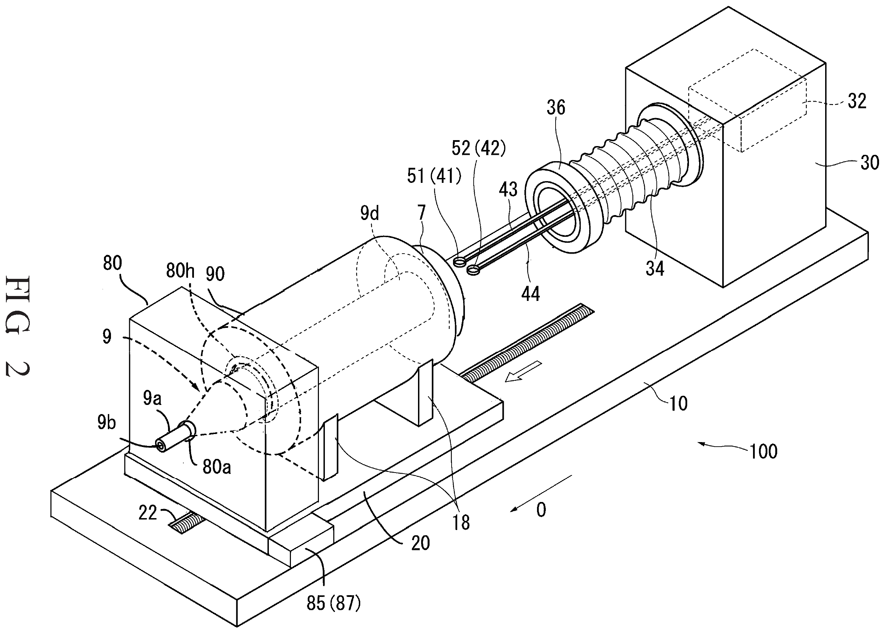

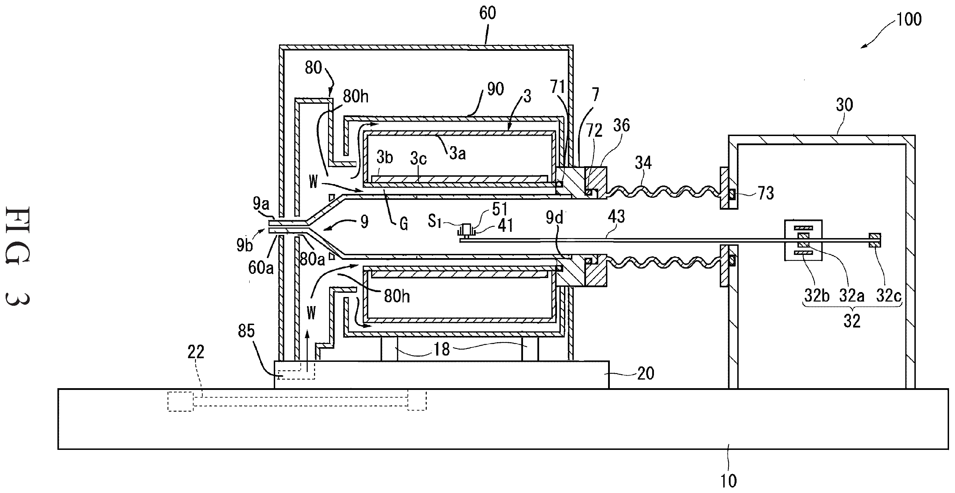

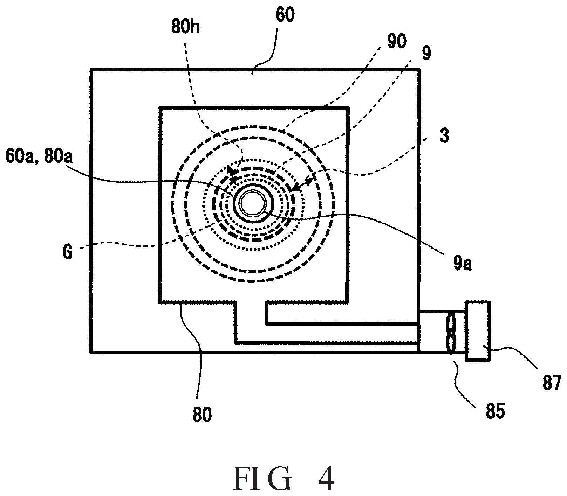

FIG. 1 is a perspective view showing the configuration of a thermal analysis apparatus 100 according to a first embodiment of the present disclosure, FIG. 2 is a view showing an embodiment in which a sample is set or replaced in the thermal analysis apparatus 100, FIG. 3 is a cross-sectional view taken along line A-A' of FIG. 1, and FIG. 4 is a view showing the arrangement of a duct 80 and an air outlet 80h seen from a front-end side.

Further, in FIGS. 1 and 2, notation of a cover 60 is omitted in order to simplify the explanation.

The thermal analysis apparatus 100 constitutes a thermogravimetry-differential thermal analysis (TG-DTA) apparatus, and includes a cylindrical furnace tube 9, a cylindrical heating furnace 3 surrounding the furnace tube 9 from outside, a pair of sample holders 41 and 42 disposed in the furnace tube 9, a support 20, a measurement chamber 30 connected to a rear-end portion 9d of the furnace tube 9 in an axial direction O, weight detectors 32 disposed in the measurement chamber 30 and measuring weight changes of samples S₁ and S₂, a base 10 having the measurement chamber 30 is mounted on its upper surface, a sample chamber 90, and a controller (computer) not shown.

The computer includes a CPU that controls the entire apparatus, an image processing unit, a storage device such as a hard disk, a display device such as a liquid crystal monitor, an input device such as a keyboard, etc.

Here, a measurement sample S₁ and a reference sample S₂ are respectively accommodated in a pair of sample vessels 51 and 52 inside the furnace tube 9, and the sample vessels 51 and 52 are respectively mounted on the pair of sample holders 41 and 42. Further, the reference sample S₂ is a reference material (reference) for the measurement sample.

Alternatively, two struts 18 extend downward from the lower portion near both ends in the axial direction O of the cylindrical heating furnace 3, and the struts 18 are connected to the upper surface of the support 20. Alternatively, a flange portion 7 is fixed to an outer side of a rear-end portion 9d of the furnace tube 9.

Further, a groove is formed along an axial direction O of the base 10, and a linear actuator 22 is disposed in the groove. A rear-end side of the linear actuator 22 is connected to the support 20 and a front-end side (servo motor) of the linear actuator 22 is connected to the base 10. Further, the support 20 is made movable forward and backward in the axial direction O along the groove by the linear actuator 22.

The linear actuator 22 is composed of, for example, a ball screw and a servo motor, and any known actuator that linearly operates in the axial direction O can be used.

The heating furnace 3 includes a cylindrical core tube 3c that forms the inner surface of the heating furnace 3, a heater 3b fitted outside the core tube 3c, and a cylindrical outer tube 3a having sidewalls at both ends (see FIG. 3). A central hole for inserting and passing the core tube 3c is formed at centers of both sidewalls of the outer tube 3a. The outer tube 3a surrounds the heater 3b and retains heat of the cylindrical heater 3, and an adjustment hole (not shown) may appropriately be formed at the outer tube 3a to adjust the temperature of the cylindrical heater 3. Further, the inner diameter of the core tube 3c is larger than the outer diameter of the furnace tube 9, that is, the inner diameter of the core tube 3c is spaced apart from the outer diameter of the furnace tube 9, whereby a gap G is formed. Therefore, the cylindrical heating furnace 3 is configured to heat the furnance tube 9 (and samples S₁ and S₂ therein) without contact.

The furnace tube 9 decreases in diameter in a tapered shape toward the front-end portion 9a, the front-end portion 9a is formed in a slender capillary shape, and an exhaust hole 9b formed at its front end. Further, purge gas is appropriately introduced into the furnace tube 9 from a rear-end side, and the purge gas or decomposition products of the samples caused by heating is discharged to the outside through the exhaust hole 9b. Meanwhile, a ring-shaped flange portion 7 is mounted at an outer side of a rear-end portion 9d of the furnace tube 9 through a sealing member 71 (see FIG. 3).

Alternatively, the furnace tube 9 is preferably made of a transparent material, and the samples S₁ and S₂ can be observed from outside the furnance tube 9. Here, the transparent material is a material that transmits visible light at a predetermined light transmittance, and also includes a translucent material. Alternatively, quartz glass, sapphire glass, or yttrium-aluminum-garnet (YAG) ceramic can be suitably used as the transparent material.

Further, the furnace tube 9 may not be made of a transparent material, and an opaque material such as alumina may also be used.

Balance arms 43 and 44 extending toward a rear-end side in the axial direction O are respectively connected to the sample holders 41 and 42, and the balance arms 43 and 44 are arranged in the horizontal direction with respect to each other. Alternatively, a thermocouple is provided immediately below the sample holders 41 and 42 so that the temperature of the samples can be measured. The balance arms 43 and 44 are formed, for example, by surrounding the thermocouple with alumina or the like, and the sample holders 41 and 42 are made, for example, of platinum or a platinum alloy.

The measurement chamber 30 is disposed at the rear end of the furnace tube 9, and a tubular bellows 34 extending forward in the axial direction O toward the furnace tube 9 is mounted on a front-end portion of the measurement chamber 30 through a sealing member 73. A front-end side of the bellows 34 forms a flange portion 36, and the flange portion 36 is hermetically connected to the flange portion 7 through a sealing member 72. In this manner, the interior of the measurement chamber 30 and the interior of the furnace tube 9 communicate with each other, and the rear ends of the balance arms 43 and 44 extend into the interior of the measurement chamber 30 through the furnace tube 9. Further, for example, an O-ring, a gasket, etc. may be used as the sealing members 71 to 73.

As shown in FIG. 3, the weight detector 32 disposed in the measurement chamber 30 include a coil 32a, a magnet 32b, and a position detector 32c. The position detectors 32c may be, for example, photo sensors, are disposed at the rear-end sides of the balance arms 43 and 44, respectively, and detect whether the balance arms 43 and 44 are in a horizontal state. Meanwhile, the coils 32a are mounted at axial centers (support points) of the respective balance arms 43 and 44, and the magnets 32b are disposed at both sides of the coil 32a. Further, current is supplied to the coils 32a so that the balance arms 43 and 44 become horizontal, and the current is measured to measure the weights of the sample S₁ and S₂ at the front ends of the respective balance arms 43 and 44. Further, weight detectors 32 are provided for the respective balance arms 43 and 44, respectively.

Measurement is performed in a state where the flange portion 36 and the flange portion 7 are airtightly connected, and the heating furnace 3 covers each of the sample holders 41 and 42 (i.e., samples Si and S₂) of the furnace tube 9."

FIG. 2 shows the positions of the heating furnace 3 and the furnace tube 9 when the samples S₁ and S₂ are set or replaced in sample vessels 51 and 52 on the respective sample holders 41 and 42. In order to set (dispose) or replace the samples S₁ and S₂, when the support 20 is advanced toward the front-end side of the furnace tube 9 (left in FIG. 2) by the linear actuator 22, the furnace tube 9 and the heating furnace 3 (and the sample chamber 90 not shown), which are fixed to the support 20, are advanced toward the front-end side relative to the measurement position and the sample holders 41 and 42 are exposed behind the furnace tube 9 and the heating furnace 3. Accordingly, the samples S₁ and S₂ can be set or replaced.

As shown in FIG. 3, the furnace tube 9 and the heating furnace 3 of the thermal analysis apparatus 100 are accommodated in a cylindrical sample chamber 90. The sample chamber 90 is fixed on the support 20 and moved together with the support 20. Alternatively, the sample chamber 90 surrounds the heating furnace 3 so that it retains heat around the heating furnace 3 and enables rapid heating.

In the sample chamber 90, a first opening 60a is formed at the portion corresponding to the front-end portion 9a of the furnace tube 9, and the front-end portion 9a is inserted toward the outside through the first opening 60a.

Further, the sample chamber 90 and the duct 80 to be described below are covered with a box-shaped cover 60.

Further, inside the cover 60, a box-shaped duct 80 that forms a flow path of the air flow W is provided at the front-end sides of the furnace tube 9 and the heating furnace 3, a portion of the rear-end side of the duct 80 (the surface facing the furnace tube 9 and the heating furnace 3) is open, thereby forming an annular air outlet 80h (see FIG. 4).

That is, the duct 80 is positioned at the front-end sides of the furnace tube 9 and the heating furnace 3, and a through-hole for inserting the tapered portion and the front-end portion 9a of the furnace tube 9 is formed along the axial direction O and surrounds the tapered portion and the front-end portion 9a of the furnace tube 9. In the duct 80, the opening that surrounds the front-end portion 9a of the furnace tube 9 is defined as a second opening 80a.

Further, a blowing unit 85 (a blowing fan or a compressed air inlet) is disposed in communication with the duct 80 at the upstream side of the duct 80 (under the duct 80 in FIG. 3), and the blowing unit 85 supplies airflow W to the air outlet 80h through the duct 80.

Further, the sample chamber 90 is not of a sealed structure, and the airflow from the blowing unit 85 is allowed to leak to the outside from the rear of the sample chamber (toward the measurement chamber 30).

As shown in FIG. 4, when viewed in the axial direction O, the air outlet 80h has an annular shape that is continuous in the circumferential direction. Further, the air outlet 80h is formed to intersect the heating furnace 3. This allows air flow to be blown onto both the heating furnace 3 and the furnace tube 9 (the gap G).

Further, the air outlet 80h is disposed at a position intersecting the end face of the heating furnace 3.

Specifically, an outer peripheral side of the air outlet 80h protrudes outward beyond the outer periphery of the heater 3b of the heating furnace 3. Meanwhile, an inner peripheral side of the air outlet 80h extends inward beyond the gap G.

Further, a cooling unit (or a heating unit) 87 is provided upstream of the blowing unit 85. When the cooling unit (or the heating unit) 87 is not provided, the blowing unit 85 supplies airflow at room temperature, and it is possible to adjust the airflow temperature to a temperature lower or higher than room temperature by means of the cooling unit (or the heating unit) 87.

In addition, the term "airflow" is used because the furnace tube 9 and a sample are heated in the heating furnace 3, and room-temperature outside air is introduced by the blowing unit 85 and supplied from the air outlet 80h through the duct 80 to cool the heating furnace 3 or the furnace tube 9. However, after the furnace tube 9 and the sample are cooled lower than room temperature and measured, the room-temperature outside air is supplied to warm the heating furnace 3 and the furnace tube 9, and therefore it becomes "heated airflow."

As described above, in the first embodiment, since the air outlet 80h is disposed at the outer side relative to the heating furnace 3 (on the front-end side relative to the heating furnace 3 in FIG. 3) in the axial direction O, airflow W can be applied along the cylindrical surfaces of the furnace tube 9 and the heating furnace 3, including the gap G between the furnace tube 9 and the heating furnace 3, whereby the heating furnace 3 can be rapidly cooled and the measurement throughput can be improved.

In contrast, even if airflow W is directed from a direction perpendicular to the axial direction O of the heating furnace 3, the airflow hardly flows along the axial direction O of the heating furnace 3, so the airflow W does not reach the entire heating furnace 3.

Further, as shown in FIG. 3, in the first embodiment, the blowing direction F of the airflow W at the air outlet 80h extends along the axial direction O. Accordingly, airflow W can be more reliably applied to the entire surfaced along the cylindrical surfaces of the furnace tube 9 and the heating furnace 3.

Further, the blowing direction is defined as the direction of a tangent to the inner surface at the outlet of the air outlet 80h. The inner surface at the outlet refers to a surface that includes the periphery of the outlet.

Further, as shown in FIG. 4, in the first embodiment, when viewed in the axial direction O, the air outlet 80h is disposed at a position intersecting the heating furnace 3.

Accordingly, since airflow W from the air outlet 80h is directed to at least a portion of the end face of the heating furnace 3, the heating furnace 3 can be cooled rapidly.

Further, the air outlet 80h intersecting the heating furnace 3 means that it is sufficient that at least a portion of the air outlet 80h intersects the heating furnace 3.

In order to determine whether the airflow W is directed to the outer periphery of the heating furnace 3 or the gap G, it is sufficient to check whether air is flowing, for example, using a flow-indicating ribbon.

Further, as shown in FIGS. 3 and 4, in the first embodiment, a cylindrical sample chamber 90 extending in the axial direction O is provided around the outer periphery of the heating furnace 3.

Accordingly, the airflow W that is directed to the outer periphery of the heating furnace 3 flows downstream along the axial direction O through the region between the outer periphery of the heating furnace 3 and the sample chamber 90, whereby the heating furnace 3 can be cooled more rapidly.

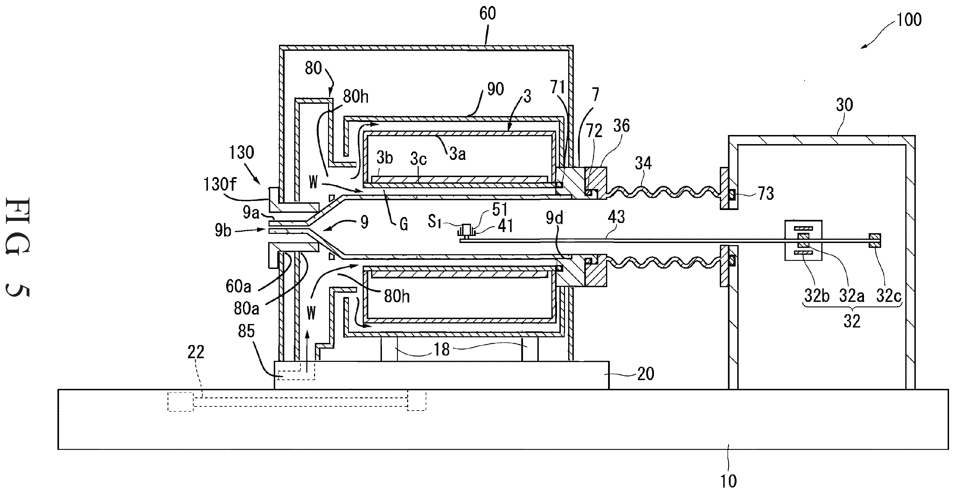

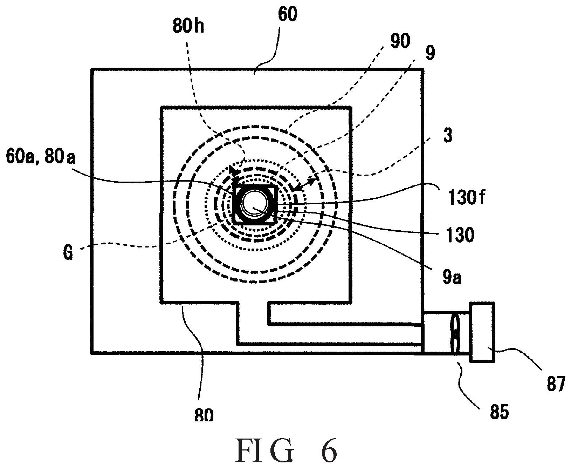

FIGS. 5 and 6 illustrate a case in which, in the thermal analysis apparatus 100, a cylindrical cover duct 130 that surrounds the front-end portion 9a of the furnace tube 9 is provided to be inserted through the first opening 60a of the cover 60 and the second opening 80a of the duct 80.

The front end 130f of the cover duct 130 faces outward through the cover 60 (the first opening 60a). Further, in this example, although the cover duct 130 itself is cylindrical, the front end 130f has a rectangular flange shape. The front end 130f may also be circular.

As described above, by providing the cover duct 130 to be inserted through the first opening 60a and the second opening 180a, the front-end portion 9a of the furnace tube 9 can be covered by the cover duct 130 between the first opening 60a and the second opening 180a, whereby the heat retention performance at the front end 9a is improved.

As a result, it is possible to suppress solidification of the gas generated from the sample S₁ in the furnace tube 9 at the front-end portion 9a or a temperature drop of the gas.

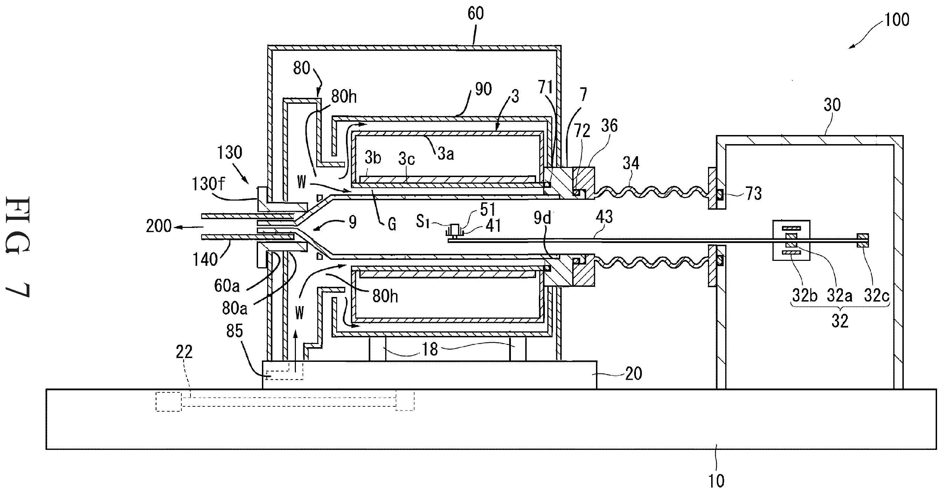

FIG. 7 illustrates a case in which a transfer tube 140 is provided in the cover duct 130 in the thermal analysis apparatus 100.

As shown in FIG. 7, the transfer tube 140 is fitted onto the front-end portion 9a of the furnace tube 9 and is inserted in the cover duct 130.

Accordingly, the gas generated from the sample S₁ in the furnace tube 9 is introduced, through the front-end portion 9a and the transfer tube 140, into the gas analysis apparatus 200 (not shown) connected to another end (the front end in FIG. 7) of the transfer tube 140.

In this configuration, since the transfer tube 140 is inserted in the cover duct 130, it is possible to suppress solidification of the gas generated from the sample S₁ in the transfer tube 140 due to the heat-retention effect of the cover duct 130.

Further, if a heating configuration that heats the transfer tube 140 is provided, it is possible to further suppress solidification of the gas generated from the sample S₁ in the transfer tube 140. As the heating configuration, a metallic transfer tube 140 and a pair of electrodes and a power supply for electrically heating the transfer tube 140 can be exemplified.

Further, in terms of heat retention, it is preferable to externally fit the transfer tube 140 up to the innermost side of the front-end portion 9a of the furnace tube 9 (the tapered portion side of the furnace tube 9).

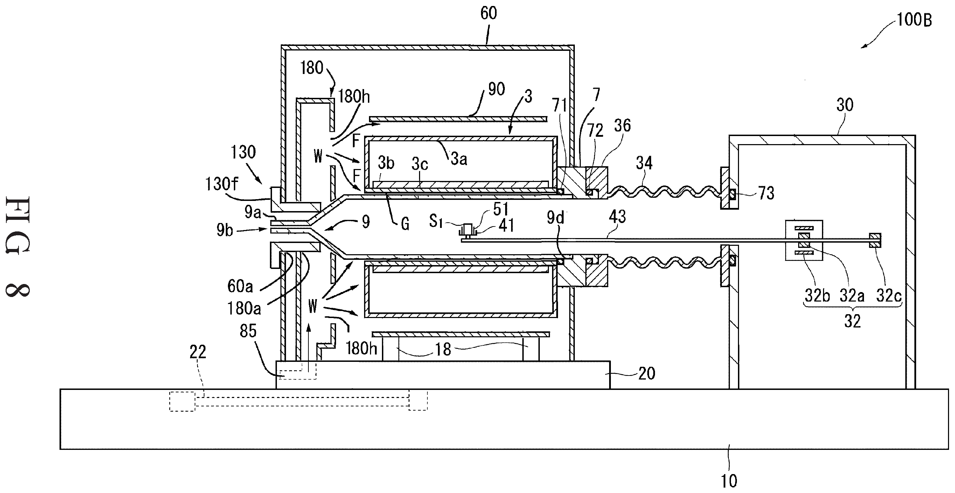

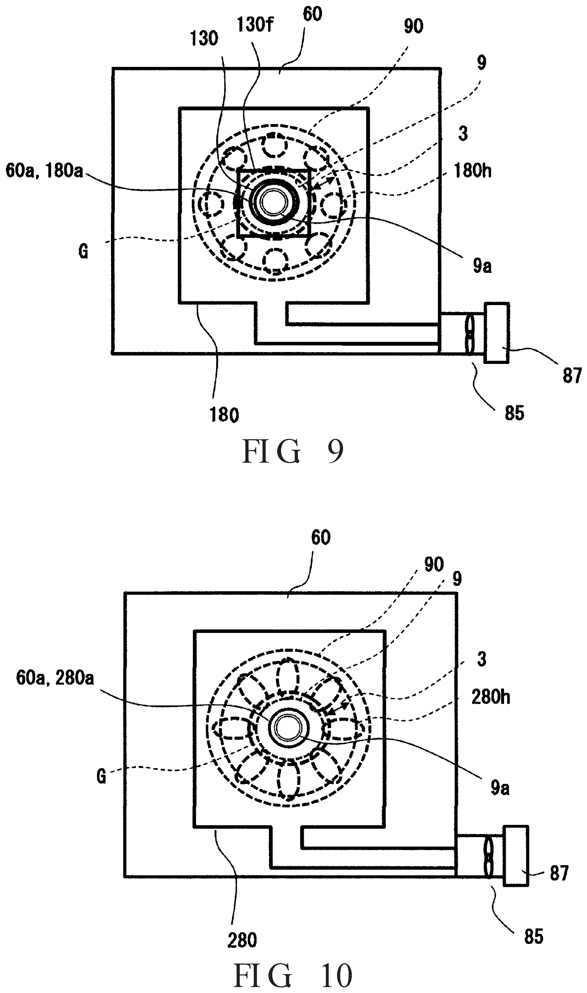

Next, a thermal analysis apparatus 100B according to a second embodiment of the present disclosure is described with reference to FIGS. 8 and 9. Further, in the thermal analysis apparatus 100B according to the second embodiment, identical components to those of the thermal analysis apparatus 100 are denoted by the same reference numerals, and description thereof is omitted.

FIG. 8 is a cross-sectional view showing the configuration of the thermal analysis apparatus 100B and corresponds to FIG. 3. FIG. 9 is a view showing the arrangement of a duct 180 and an air outlet 180h seen from a front-end side.

As shown in FIG. 9, when viewed from the axial direction O, eight air outlets 180h are provided at equal intervals along a circumference around the heating furnace 3. Further, each air outlet 80h is disposed at a position intersecting the end face of the heating furnace 3.

Here, the outer peripheral side of each air outlet 180h protrudes beyond the outer periphery of the heating furnace 3 and extends to the region between the heating furnace 3 and the sample chamber 90. On the other hand, the inner peripheral side of each air outlet 180h is positioned outside the inner periphery of the heating furnace 3, and each air outlet 180h has a circular shape.

In this manner, when viewed from the axial direction O, the outer diameter of the air outlets 180h is made larger than the overall outer diameters of the heating furnace 3 and the furnace tube 9. Accordingly, airflow can be directed to both the heating furnace 3 and the furnace tube 9.

In the second embodiment as well, since the air outlets 180h are disposed at the outer side relative to the heating furnace 3 (at the front-end side relative to the heating furnace 3 in FIG. 5) in the axial direction O, airflow W can be directed along the entire cylindrical surfaces of the furnace tube 9 and the heating furnace 3, whereby it is possible to improve measurement throughput by rapidly cooling the heating furnace 3.

The present disclosure is not limited to the embodiments described above, and of course, it naturally extends to various modifications and equivalents that fall within the spirit and scope of the present disclosure.

For example, the thermal analysis apparatus of the present disclosure can be applied not only to the thermogravimetric analysis (TG) apparatus described above but also to all types of thermal analysis that is defined in JIS K 0129:2005 "General Rules for Thermal Analysis" and measures the physical properties of samples when the temperature of the measurement targets (samples) is program-controlled. Specifically, (1) a differential thermal analysis (DTA) apparatus that detects temperature (temperature differences), (2) a differential scanning calorimetry (DSC) apparatus that detects heat-flow differences, and (3) a thermogravimetric analysis (TG) apparatus that detects mass (weight changes), a thermogravimetry-differential thermal analysis apparatus, etc. can be exemplified.

The air outlet may be positioned at the outer side relative to the heating furnace in the axial direction, and for example, it may be disposed at the rear-end side relative to the heating furnace. In this case, the airflow flows from the air outlet toward the front end.

The arrangement of the air outlets is not limited, and for example, as shown in FIG. 10, air outlets 280h of a duct 280 may be formed in an elliptical shape and provided at a plurality of spaced-apart positions along the circumference around the heating furnace 3 (eight at equal intervals in FIG. 10).

Further, in the example of FIG. 10, each air outlet 280h is disposed at a position intersecting the end face of the heating furnace 3. Further, the outer peripheral side of each air outlet 280h protrudes beyond the outer periphery of the heating furnace 3 and extends to the region between the heating furnace 3 and the sample chamber 90. On the other hand, the inner peripheral side of each air outlet 280h is positioned inside beyond the inner periphery of the heating furnace 3 and extends to the gap G between the furnace tube 9 and the heating furnace 3.

Accordingly, airflow can be directed to both the heating furnace 3 and the furnace tube 9.

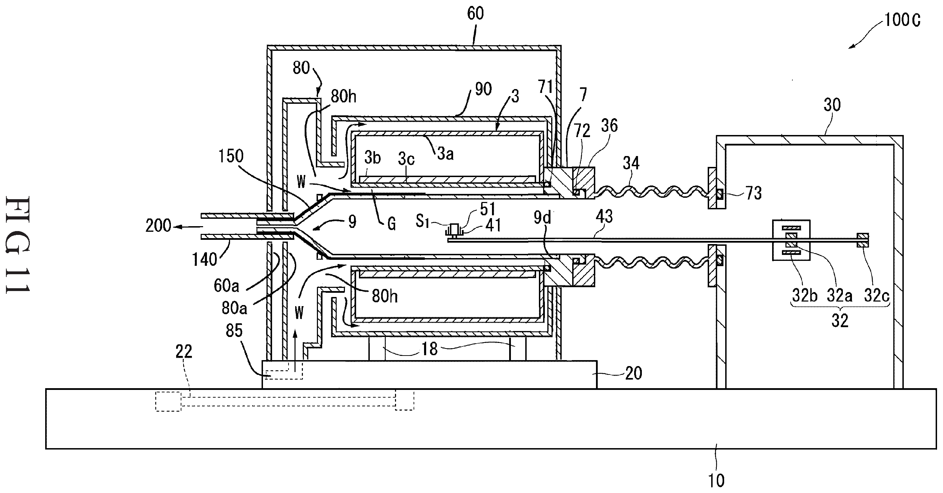

Further, in the example of FIGS. 5 to 7, heat retention of the transfer tube 140 was made using the cover duct 130, but instead, as shown in FIG. 11, a furnace-tube heat transfer unit 150 may be provided. FIG. 11 is a cross-sectional view corresponding to FIG. 7.

In the thermal analysis apparatus 100C shown in FIG. 11, a region of the outer surface of the furnace tube 9 from the front-end portion 9a to a portion of the part inserted in the heating furnace 3 toward the rear end constitutes the furnace-tube heat transfer unit 150.

The furnace-tube heat transfer unit 150 may be formed by plating the outer surface of the furnace tube 9. Alternatively, a separate member such as a cap may be used as the furnace-tube heat transfer unit and fitted over the above-described region of the furnace tube 9.

Heat from the heating furnace 3 is transferred through the furnace-tube heat transfer unit 150 to the front-end portion 9a, whereby it is possible to heat the transfer tube 140 fitted at the front-end portion 9a and retain heat thereof.

It is preferable that the thickness of the furnace-tube heat transfer unit 150 be set such that the airflow for cooling inside the duct 80 is not obstructed. As the material of the furnace-tube heat transfer unit 150, a material having high thermal conductivity and high heat resistance is preferable, and for example, silver, gold, copper, or the like may be used.

### [Explanation of reference number]

- 3: heating furnace
- 9: furnace tube

- 9a: front-end portion
- 32: weight detector
- 43, 44: balance arms
- 60: cover
- 80, 180, 280: duct
- 80h, 180h, 280h: air outlets
- 85: blowing unit
- 87: cooling unit or a heating unit
- 90: sample chamber
- 100, 100b, 100c: thermal analysis apparatus
- 130: cover duct
- 130f: front end of cover duct
- 140: transfer tube
- 150: furnace-tube heat transfer unit
- 200: gas analysis apparatus
- S₁: measurement sample
- S₂: reference sample
- O: axial direction
- W: airflow
- G: gap between furnace tube and heating furnace

## Claims

1. A thermal analysis apparatus comprising:
a cylindrical furnace tube (9) extending in an axial direction (O);
a balance arm (43, 44) that places a sample (S₁, S₂) inside the furnace tube (9);
a detector (32) disposed at rear-end side of the balance arm (43, 44) in the axial direction (O), extending in the axial direction, and detecting the weight and thermal characteristics of the sample (S₁, S₂); and
a cylindrical heating furnace (3) provided on an outer periphery of the furnace tube (9) and extending in the axial direction (O),
**characterized in that** the thermal analysis apparatus further comprises a blowing unit (85) for providing airflow (W), a duct (80) that is in communication with the blowing unit (85) to form a flow path of the airflow (W), and that is disposed at an outer side in the axial direction (O) relative to the heating furnace (9), and an air outlet (80h) formed by opening a portion of the duct (80) so as to direct the airflow(W) to the furnace tube (9) and the heating furnace (3).

2. The thermal analysis apparatus of claim 1, wherein a blowing direction of the airflow (W) at the air outlet (80h) is along the axial direction (O).

3. The thermal analysis apparatus of claim 1 or 2, wherein the air outlet (80h) is disposed at a position intersecting the heating furnace (9) when viewed from the axial direction (O).

4. The thermal analysis apparatus of claim 1 or 2, wherein the airflow (W) is directed to an outer periphery of the heating furnace (3) and a gap between the furnace tube (9) and the heating furnace (3).

5. The thermal analysis apparatus of claim 1 or 2, wherein a cylindrical sample chamber (90) extending in the axial direction (O) is provided on the outer periphery of the heating furnace (3).

6. The thermal analysis apparatus of claim 1 or 2, wherein a cooling unit or a heating unit (87) is provided at an upstream side or a downstream side of the blowing unit (85).

7. The thermal analysis apparatus of claim 1 or 2, wherein a front-end portion (9a) having an elongated, reduced diameter while being open at a front-end is integrally formed at a front-end side of the furnace tube (9),
the thermal analysis apparatus further comprises a cylindrical cover duct (130) surrounding the front-end portion (9a), and
a front end of the cover duct (130) passes through the sample chamber (90) and faces the outside.

8. The thermal analysis apparatus of claim 7, further comprising a transfer tube (140) fitted onto the front-end portion (9a) of the furnace tube (9) and inserted into the cover duct (130),
wherein gas generated from the sample (S₁, S₂) in the furnace tube (9) is introduced, via the transfer tube (140), into a gas analysis apparatus (200) connected to another end of the transfer tube (140).

9. The thermal analysis apparatus of claim 8, comprising a heating unit that heats the transfer tube (140) and suppresses solidification of the gas generated from the sample (S₁, S₂) or a temperature drop of the gas in the transfer tube (140).

10. The thermal analysis apparatus of claim 1 or 2, wherein a front-end portion (9a) having an elongated, reduced diameter while being open at a front-end is integrally formed at a front-end side of the furnace tube (9),
a region of an outer surface of the furnace tube (9), extending from the front-end portion (9a) toward a rear end to a part of a portion inserted into the heating furnace (3), or a separate member covering the region, constitutes a furnace-tube heat transfer unit (150),
the thermal analysis apparatus further comprises a transfer tube (140) fitted onto the furnace-tube heat transfer unit (150) at a position overlapping the front-end portion of the furnace tube (9), and
heat from the heating furnace (9) is transferred to the transfer tube (140) through the furnace-tube heat transfer unit (150), thereby suppressing solidification of the gas generated from the sample (S₁, S₂) or a temperature drop of the gas in the transfer tube.

11. The thermal analysis apparatus of claim 1 or 2, wherein the thermal analysis apparatus is a thermogravimetric analysis apparatus, a differential thermal analysis apparatus, or a thermogravimetry-differential thermal analysis apparatus.
